# EUROPÄISCHE PATENTANMELDUNG

(11) **EP 0 847 905 A1**
(43) Veröffentlichungstag der Anmeldung: **17.06.1998**
(21) Anmeldenummer: 97119507.8
(22) Anmeldetag: 07.11.1997
(51) Int. Cl.: B60R 21/24

(54) **Fahrzeuginsassen-Rückhaltesystem**

(30) Priorität: 11.12.1996 DE 29621515 U
(71) Anmelder: TRW Occupant Restraint Systems GmbH & Co. KG, 73551 Alfdorf (DE)
(72) Erfinder: Bosio, Allen Charles, 73575 Leinzell (DE); Kotzschmar, Ronny, 73525 Schwäbisch Gmünd (DE)
(74) Vertreter: Degwert, Hartmut, Dipl.-Phys.

(57) **Zusammenfassung**

Ein Fahrzeuginsassen-Rückhaltesystem weist einen Gassack (1) und einen Gasgenerator (2) zum Aufblasen des Gassacks (1) auf. Die vom Gasgenerator zum Aufblasen des Gassacks bei gegebenem Gassackvolumen bereitzustellende Gasmenge wird erheblich reduziert, und die Schutzwirkung des Fahrzeuginsassen-Rückhaltesystems wird verbessert, indem der Gassack (1) eine Hauptkammer (3) und wenigstens eine Sekundärkammer (4) aufweist, die zur Hauptkammer (3) hin durch eine geschlossene Wandung (6) aus relativ gasdichtem Material und zu dem den Gassack umgebenden Außenraum durch ein Wandungsteil (5) aus relativ gasdurchlässigem Material abgegrenzt ist, und indem nur die Hauptkammer (3) durch die vom Gasgenerator (2) erzeugten Gase direkt beaufschlagbar ist. Die Haupt- und Sekundärkammer sind dabei so ausgebildet, daß beim Befüllen der Hauptkammer (3) die Sekundärkammer (4) entfaltet wird und im wesentlichen durch den bei ihrer Entfaltung erzeugten Unterdruck mit Umgebungsluft befüllbar ist.

## Beschreibung

Die Erfindung betrifft ein Fahrzeuginsassen-Rückhaltesystem mit einem Gassack und einem Gasgenerator zum Befüllen des Gassacks.

Gattungsgemäße Fahrzeuginsassen-Rückhaltesysteme werden seit mehreren Jahren serienmäßig in zahlreiche Fahrzeuge eingebaut, so daß deren Aufbau und Funktionsweise bekannt sind. Bei einem Aufprall wird ein Gassack durch einen Gasgenerator aufgeblasen, um einen Fahrzeuginsassen abzufangen. Die zum Befüllen des Gassacks erforderliche Gasmenge muß innerhalb kürzester Zeit von dem Gasgenerator erzeugt werden. Diese Forderung erfüllen pyrotechnische Gasgeneratoren. Die Verbrennung einer pyrotechnischen Ladung erzeugt aber auch umweltschädigende Gase, so daß man bestrebt ist, die Ladung so klein wie möglich zu dimensionieren.

Durch die Erfindung wird bei gegebenem Volumen eines Gassacks die zum Aufblasen desselben vom Gasgenerator bereitzustellende Gasmenge erheblich reduziert. Darüber hinaus wird die Schutzwirkung des Fahrzeuginsassen-Rückhaltesystems verbessert.

Diese Verbesserungen werden durch ein Fahrzeuginsassen-Rückhaltesystem der eingangs genannten Art erreicht, dessen Gassack eine Hauptkammer und wenigstens eine Sekundärkammer aufweist, die zur Hauptkammer hin durch eine Wandung aus relativ gasdichtem Material und zu dem den Gassack umgebenden Außenraum durch ein Wandungsteil aus relativ gasdurchlässigem Material abgegrenzt ist. Von den durch den Gasgenerator erzeugten Gasen wird nur die Hauptkammer direkt beaufschlagt, und die Haupt- und Sekundärkammer sind so ausgebildet, daß beim Befüllen der Hauptkammer die Sekundärkammer entfaltet und im wesentlichen durch den bei ihrer Entfaltung erzeugten Unterdruck mit Umgebungsluft befüllt wird. Durch Vorsehen einer oder mehrerer Sekundärkammern, die sich beim Aufblasen des Gassacks durch den Gasgenerator mit Umgebungsluft füllen, die aus dem Fahrzeuginnenraum angesaugt wird, kann der Gassack bei gleichbleibender Gasgeneratorleistung in der gleichen Zeit auf ein größeres Volumen entfaltet werden. Indem die Sekundärkammer in gewissem Ausmaß zusätzlich mit Gas aus der Hauptkammer befüllt wird, kann sie schneller befüllt werden, und der Druckunterschied von der Sekundärkammer zur Hauptkammer kann verringert werden.

Vorteilhafterweise wirkt die geschlossene Wandung der Sekundärkammer als Fangbandsystem. Eine Formstabilisierung des befüllten Gassacks kann hierdurch erfolgen, ohne daß zusätzliche Fangbänder erforderlich sind.

Vorzugsweise ist die Sekundärkammer kegelförmig ausgeführt, wobei das sich verjüngende Ende benachbart der Einblasöffnung des Gasgenerators angeordnet ist und die Kegelgrundfläche auf dem Gassack in einem Bereich gegenüber der Einblasöffnung liegt. Durch eine solche Formgebung wird der Entfaltungsvorgang der Sekundärkammer in vorteilhafter Weise unterstützt. Weiterhin können mehrere solcher kegelförmiger Sekundärkammern vorgesehen sein, um das Volumen des Gassacks weiter zu steigern.

Schließlich kann es vorteilhaft sein, eine Außenfläche der Sekundärkammer in einem dem Insassen zugewandten Bereich des Gassacks anzuordnen. Hierdurch wird ein kontrolliertes Abfangen begünstigt und insbesondere durch weiches Abfangen des Kopfes eines Insassen ein verbesserter Schutz erzielt.

Ein bevorzugtes Ausführungsbeispiel der Erfindung ist in der Zeichnung dargestellt und wird nachfolgend beschrieben.
- Fig. 1 zeigt eine Schnittansicht des erfindungsgemäßen Fahrzeuginsassen-Rückhaltesystems im entfalteten Zustand;
- Fig. 2 zeigt eine perspektivische Teilansicht des erfindungsgemäßen Fahrzeuginsassen-Rückhaltesystems im entfalteten Zustand, wobei zum Zweck einer übersichtlicheren Darstellung nur ein mittlerer Abschnitt dargestellt ist.

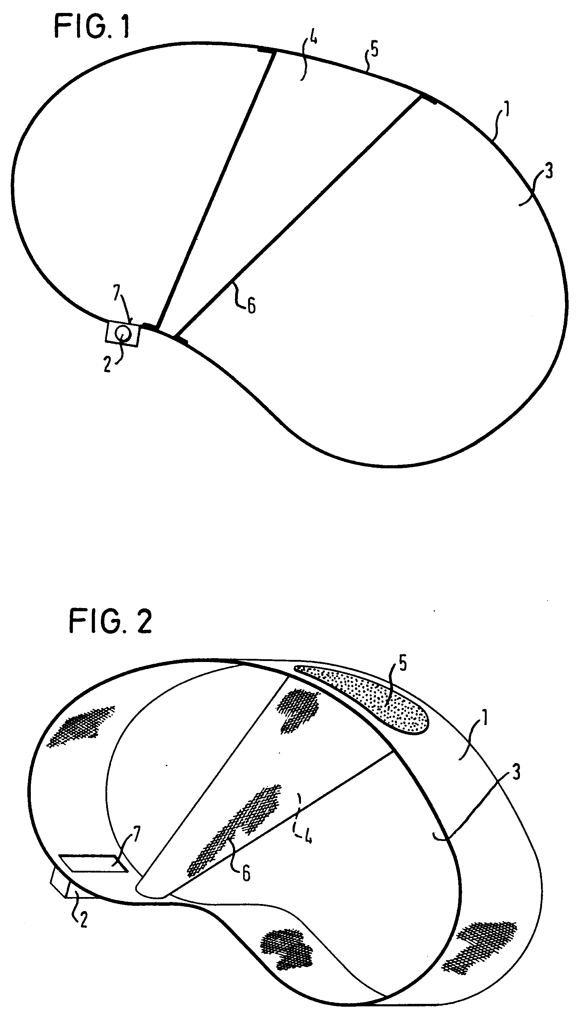

Das Fahrzeuginsassen-Rückhaltesystem in Fig. 1 weist einen Gassack 1 und einen Gasgenerator 2 zum Aufblasen des Gassacks 1 auf. Innerhalb des Gassackvolumens sind eine Hauptkammer 3 und eine kegelförmige Sekundärkammer 4 vorgesehen, die an ihrer Kegelgrundfläche gegen den den Gassack umgebenden Außenraum durch ein Wandungsteil 5 aus relativ gasdurchlässigem Material, insbesondere ein gasdurchlässiges Gewebe, abgegrenzt ist. Die Mantelfläche der kegelförmigen Sekundärkammer 4 bildet eine Wandung 6 zur Abgrenzung gegen die Hauptkammer 3 und besteht aus einem relativ gasdichten Material, insbesondere einem relativ gasdichten Gewebe. An den jeweiligen Stoßstellen der Sekundärkammermantelfläche mit dem übrigen Teil des Gassacks 1 sind diese vernäht. Das sich verjüngende Ende der kegelförmigen Sekundärkammer ist neben der Einblasöffnung 7 des Gasgenerators 2 angeordnet, und ihre Kegelgrundfläche liegt in einem Bereich gegenüber der Einblasöffnung 7, der einem nicht dargestellten Fahrzeuginsassen zugewandt ist.

Zur Verdeutlichung der Lage der kegelförmigen Sekundärkammer 4 innerhalb des Gassacks 1 dient die perspektivische Ansicht der Fig. 2. Der besseren Übersichtlichkeit halber ist jedoch nur der mittlere, die kegelförmige Sekundärkammer 4 und den Gasgenerator 2 enthaltende Abschnitt des Gassacks 1 dargestellt. Die nicht dargestellten Abschnitte rechts und links des mittleren Abschnitts vervollständigen die übliche Gassack-Kissenform.

Wird der Gasgenerator 2 durch eine geeignete, konventionelle Vorrichtung ausgelöst, strömt Gas vom Gasgenerator 2 durch die Einblasöffnung 7 in die Hauptkammer 3 und entfaltet diese. Mit der vollständigen Entfaltung und der Befüllung der Hauptkammer 3 wird deren Außenumfang gespannt, so daß sich auch die kegelförmige Sekundärkammer 4 entfaltet. Der dadurch in der Sekundärkammer 4 entstehende relative Unterdruck saugt Luft aus dem Fahrzeuginnenraum durch das Wandungsteil 5 aus gasdurchlässigem Gewebe in die kegelförmige Sekundärkammer 4 und gleichzeitig eine geringere Menge Gas aus der Hauptkammer 3 durch die Wandung 6 aus relativ gasdichtem Gewebe ebenfalls in die kegelförmige Sekundärkammer 4. Durch Befüllen der Sekundärkammer 4 mit Umgebungsluft wird die zum Befüllen des Gassacks 1 erforderliche Gasmenge verringert.

Das relativ gasdichte Gewebe, aus dem die Mantelfläche der kegelförmigen Sekundärkammer 4, die Wandung 6, besteht, ist mechanisch so stabil, daß die Wandung 6 während des Aufblasvorgangs des Gassacks 1 gleichzeitig als Fangbandsystem dienen kann und daß auch bei hohem Druck innerhalb des Gassacks 1 dessen kissenförmige Querschnittsform erhalten bleibt.

Der Durchlässigkeitsgrad der Wandung 6 aus relativ gasdichtem Gewebe und der Durchlässigkeitsgrad des Wandungsteils 5 aus relativ gasdurchlässigem Gewebe sind dabei so aufeinander abgestimmt, daß zum Zeitpunkt des Aufpralls des Fahrzeuginsassen auf den Gassack 1 dieser vollständig befüllt ist, wobei aber in der kegelförmigen Sekundärkammer 4 ein geringerer Druck herrscht als in der Hauptkammer 3. Da sich die aus relativ gasdurchlässigem Gewebe bestehende Kegelgrundfläche der Sekundärkammer 4, das Wandungsteil 5, im Kopfaufprallbereich des Fahrzeuginsassen befindet, kann der Kopf des Fahrzeuginsassen weicher abgefangen werden als beispielsweise dessen Oberkörper, was die Verletzungsgefahr weiter mindert.

## Patentansprüche

1. Fahrzeuginsassen-Rückhaltesystem mit einem Gassack (1) und einem Gasgenerator (2) zum Aufblasen des Gassacks (1), dadurch gekennzeichnet, daß der Gassack (1) eine Hauptkammer (3) und wenigstens eine Sekundärkammer (4) aufweist, die zur Hauptkammer (3) hin durch eine geschlossene Wandung (6) aus relativ gasdichtem Material und zu dem den Gassack umgebenden Außenraum durch ein Wandungsteil (5) aus relativ gasdurchlässigem Material abgegrenzt ist, und daß nur die Hauptkammer (3) durch die vom Gasgenerator (2) erzeugten Gase direkt beaufschlagbar ist, wobei die Haupt- und Sekundärkammer so ausgebildet sind, daß beim Befüllen der Hauptkammer (3) die Sekundärkammer (4) entfaltet wird und im wesentlichen durch den bei ihrer Entfaltung erzeugten Unterdruck mit Umgebungsluft befüllbar ist.

2. Fahrzeuginsassen-Rückhaltesystem nach Anspruch 1, dadurch gekennzeichnet, daß die geschlossene Wandung (6) als Fangbandsystem wirkt.

3. Fahrzeuginsassen-Rückhaltesystem nach Anspruch 1 oder Anspruch 2, dadurch gekennzeichnet, daß die Sekundärkammer (4) kegelförmig ausgeführt ist, wobei das sich verjüngende Ende benachbart der Einblasöffnung (7) angeordnet ist und die Kegelgrundfläche auf dem Gassack (1) in einem Bereich gegenüber der Einblasöffnung (7) liegt.

4. Fahrzeuginsassen-Rückhaltesystem nach einem der vorstehenden Ansprüche, dadurch gekennzeichnet, daß eine Außenfläche der Sekundärkammer (4) in einem dem Insassen zugewandten Bereich des Gassacks (1) angeordnet ist.
